(19) Europäisches Patentamt
European Patent Office
Office européen des brevets

(11) **EP 3 421 761 B1**

(12) **EUROPEAN PATENT SPECIFICATION**

(45) Date of publication and mention
of the grant of the patent:
**25.11.2020 Bulletin 2020/48**

(51) Int Cl.:
*F02C 9/34* *(2006.01)*          *F23R 3/34* *(2006.01)*

(21) Application number: **17179174.2**

(22) Date of filing: **30.06.2017**

(54) **SECOND-STAGE COMBUSTOR FOR A SEQUENTIAL COMBUSTOR OF A GAS TURBINE**

SEKUNDÄRE BRENNKAMMER FÜR EINE SEQUENTIELLE GASTURBINENBRENNKAMMER

CHAMBRE DE COMBUSTION DE SECOND ÉTAGE POUR CHAMBRE DE COMBUSTION SÉQUENTIELLE D'UNE TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.01.2019 Bulletin 2019/01**

(73) Proprietor: **Ansaldo Energia IP UK Limited
London W1G 9DQ (GB)**

(72) Inventors:
• **GASSNER, Martin**
**3012 Bern (CH)**
• **KENYON, Michael**
**5400 Baden (CH)**
• **BERNERO, Stefano**
**5452 Oberrohrdorf (CH)**
• **THERKORN, Dirk**
**79761 Waldshut (DE)**

(74) Representative: **Bernotti, Andrea et al
Studio Torta S.p.A.
Via Viotti, 9
10121 Torino (IT)**

(56) References cited:
EP-A1- 2 857 658       EP-A1- 2 873 924
US-A1- 2012 036 863    US-A1- 2015 040 573
US-A1- 2015 152 791    US-B2- 7 950 215

**Description**

TECHNICAL FIELD

The present invention relates to a second-stage combustor for a sequential combustor of a gas turbine.

BACKGROUND

As it is known, control of pollutant emissions is an objective of primary importance in design of any type of thermal machine and, in particular, of gas turbines for power plants. In fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require quite flexible operation. The reduction of pollutant emissions, however, is made critical by such a flexible operation, because conflicting requirements must be balanced.

One of the problems to be addressed relates to emissions of carbon monoxide (CO) at partial load. In fact, CO emissions are not normally an issue at full load, because high combustion temperature allows complete oxidation of carbon in the air and fuel mixture fed to a combustor well within the residence time, i.e. the total time required for the mixture to travel through the combustor. Attention is instead to be paid to the production of nitrogen oxides (NOx), which tends to increase with temperature. Vice versa, lower temperature at part load helps to keep NOx emissions low, but may prevent the complete oxidation of the carbon and favour the formation of carbon monoxide.

In order to meet CO emission requirements at partial load, it has been proposed to switch off selected combustors as a function of load, so that the remaining combustors are forced to operate at higher temperature to provide the requested power output. In other words, an increasing number of combustors is switched on as the load grows. A parameter commonly used to decide switching on/off of the combustor is the exhaust gas temperature, that is the gas temperature at the outlet of the turbine (or the low pressure turbine, if in sequential combustion machines also a high pressure turbine is present). A respective threshold temperature is assigned to each combustor and, when the exhaust temperature goes above or under the threshold temperature, the corresponding combustor is switched on or off, respectively.

This solution generally improves CO emissions at partial load. CO emissions, however, may be still affected by fuel composition, in particular in sequential combustors based on self-ignition. In fact, among the constituents of natural gas, higher hydrocarbons (i.e. hydrocarbon molecules with at least two atoms of carbon, also referred to as C2+) determine the reactivity of the mixture and accordingly the ignition delay time. Hence, the greater the content of C2+, the lower the ignition delay time. Instead, inert components (typically $N_2$ and $CO_2$) determine the heating value of the gas and the flame temperature. Since the residence time in the combustor is substantially constant, the time available for complete oxidation of carbon is also dependent on the ignition delay time, which is in turn determined by fuel composition and temperature. Thus, oxidation time is sensitive to fuel composition and changes in C2+ content are reflected in corresponding changes of the ignition delay and of the time available for complete oxidation.

Operation of gas turbines is adjusted for a specific gas composition (usually as present during commissioning) or possibly with margin to cover the expected worst case in terms of fuel gas composition. However, fuel quality is variable and it is impossible to make sure that the content of higher hydrocarbons is always maintained constant or even nearly constant in time.

Thus, known solutions may result in unused potential of the fuel at partial load when gas composition is favourable (higher C2+ concentration than expected), or in the violation of emission targets when composition is unfavourable.

EP 2 857 658 A1 discloses a gas turbine comprising a plurality of combustor assemblies, each having a first stage burner unit and a second stage burner unit downstream of the first stage burner unit. The second stage burner units of at least some of the combustor assemblies are selectively activatable by a controller based on respective switching conditions of individual second stage burner units. The switching conditions include a relation between an activation threshold and a control quantity.

Other examples of known gas turbines are disclosed in EP 2 873 924 A1, in US 2015/0152791 A1 and in US 2012/0036863 A1.

SUMMARY OF THE INVENTION

It is an aim of the present invention to provide a gas turbine and a method of operating a gas turbine, which allow to overcome or at least to attenuate the limitations described.

According to the present invention, there is provided a gas turbine comprising:

a plurality of combustor assemblies, each having a first stage burner unit and a second stage burner unit downstream of the first stage burner unit, the combustor assemblies including at least a set of load-selectable combustor assemblies;

a controller, configured to control the combustor assemblies and to selectively activate and deactivate the second stage burner unit of at least the load-selectable combustor assemblies based on respective switching conditions of individual second stage burner units, the switching conditions including at least a relation between an activation threshold and a control quantity; and

a reactive species concentration detector, configured to detect a concentration of reactive species in a fuel supplied to the combustor assemblies;

wherein the controller is configured to adjust the respective activation thresholds of at least the second stage burner units of the load-selectable combustor assemblies based on the detected concentration of the reactive species.

Adjusting the activation thresholds of the second stage burner units allow to change operating conditions of active second stage burner units around switching conditions with respect to rated conditions. This is especially of advantage at low partial loads. In fact, at low partial load only some of the second stage burner units are activated, in order to maintain sufficiently high flame temperature and comparatively reduce carbon oxidation time. Further second stage burner units are only activated when respective temperature thresholds are reached. Activation of additional burners inevitably results in a temporary drop of flame temperature, which however does not fall to critical levels and allows to maintain low CO emissions as long as the fuel composition remains within commissioned ranges. If the concentration of reactive species in the fuel supplied to the burners changes, especially decreases, a change (rise) in the temperature thresholds of the inactive second stage burner units will delay activation thereof and force the active second stage burner units to operate at higher firing temperature. Hence, the change in the temperature thresholds results in increased average flame temperature around the switching conditions, thus compensating the reduced content of the reactive species. Low levels of CO emission may be preserved without affecting operation of the first stage burner units. In other words, requirements on CO emission levels can be met even without heavily increasing the firing temperature of the first stage burner units to compensate the reduced reactivity of the fuel. This is also beneficial for the first stage burner units, because components lifetime is not seriously affected.

According to an aspect of the invention, the reactive species include higher hydrocarbons and/or hydrogen.

Reliable control of switching conditions based on actual reactivity of fuel may be thus implemented, especially when higher hydrocarbons content is used.

According to an aspect of the invention, the control quantity is a gas temperature downstream of the second stage burners and the switching conditions of each second stage burner unit of the load-selectable combustor assemblies include the combination of the gas temperature greater than the respective activation threshold and a number of currently activated second stage burner units equal to or greater than a respective activation number.

According to an aspect of the invention, the control quantity is an overall fuel mass flow supplied as a whole to the second stage burner units and the switching conditions of each second stage burner unit of the load-selectable combustor assemblies include the combination of the overall fuel mass flow greater than the respective activation threshold and a number of currently activated second stage burner units equal to or greater than a respective activation number.

Exhaust gas temperature after the second stage burner units and overall mass flow are precise and reliable indicators of actual load of the gas turbine. Especially exhaust gas temperature is directly correlated to combustion temperature and, accordingly, provides accurate information also in respect of production of CO. In addition, exhaust gas temperature may be conveniently measured or estimated at the outlet of the turbine section (or the low pressure turbine section, in case also a high pressure turbine is present).

According to an aspect of the invention, the controller is configured to increase the respective activation thresholds of the second stage burner units of the load-selectable combustor assemblies as the detected concentration of the reactive species decreases.

Activation of the second stage burner units is thus delayed when fuel reactivity decreases, allowing the already active second stage burner units to reach higher firing temperatures and to keep CO emissions low.

According to an aspect of the invention, the controller is configured to adjust the respective activation thresholds of the load-selectable combustor assemblies by determining a respective correction factor based on the detected concentration of the reactive species and applying the respective correction factor to a respective reference activation thresholds.

Adjustment of the activation thresholds may be straightforwardly implemented and does not require significant computational load. Reference activation thresholds may be determined at design stage and stored in a non-volatile storage device in the controller.

According to an aspect of the invention, the correction factor is a monotonic decreasing function of the detected concentration of the reactive species.

This ensures that the lower the concentration of the reactive species, the greater the adjustment of the activation thresholds.

According to an aspect of the invention, the correction factor decreases less rapidly as the detected concentration of the reactive species increases.

The adjustment of the activation thresholds is substantial when the concentration of the reactive species seriously departs from expected ranges. When the fuel composition is close to or within the design parameters, the adjustment is lower or even negligible.

According to an aspect of the invention, the gas turbine comprises a heating value detector, configured to detect a lower heating value of fuel supplied to the combustor assemblies, wherein the controller is configured to adjust the respective activation thresholds of at least the second stage burner units of the load-selectable combustor assemblies based on the detected lower heating value.

According to an aspect of the invention, the gas turbine comprises a fuel temperature detector, configured to detect a fuel temperature of fuel supplied to the combustor assemblies, wherein the controller is configured to adjust the respective activation thresholds of at least the second stage burner units of the load-selectable combustor assemblies based on the detected fuel temperature.

In this way, further parameter which affect combustion conditions and the production of CO may be accounted for to reach desired levels.

According to an aspect of the invention, the controller is configured to control the first stage burner units of the combustor assemblies so that a firing temperature of the first stage burner units decreases as the detected concentration of the reactive species increases.

This different approach for high concentration of reactive species allows the controller to prevent flashback and high NOx emissions which may be caused by increased fuel reactivity with respect to expected ranges.

According to an aspect of the invention, the controller is configured to control the first stage burner units so that the firing temperature of the first stage burner units decreases more rapidly as the detected concentration of the reactive species increases.

Also in this case, the controller carries out stronger action when fuel reactivity is far from the expected ranges.

According to the present invention, there is also provided a method of controlling a gas turbine equipped with a plurality of combustor assemblies, each having a first stage burner unit and a second stage burner unit downstream of the first stage burner unit, the combustor assemblies including at least a set of load-selectable combustor assemblies; the method comprising:

selectively activating and deactivating the second stage burner units of at least the load-selectable combustor assemblies based on respective switching conditions of individual second stage burner units, the switching conditions including at least a relation between an activation threshold and a control quantity; and
detecting a concentration of reactive species in a fuel supplied to the combustor assemblies; and
adjusting the respective activation thresholds of at least the second stage burner units of the load-selectable combustor assemblies based on the detected concentration of the reactive species.

According to an aspect of the invention, the reactive species include higher hydrocarbons and/or hydrogen.

According to an aspect of the invention, controlling comprises increasing the respective activation thresholds of the second stage burner units of the load-selectable combustor assemblies as the detected concentration of the reactive species decreases.

BRIEF DESCRIPTION OF THE DRAWINGS

The present invention will now be described with reference to the accompanying drawings, which show some non-limitative embodiment thereof, in which:

- Figure 1 is a simplified block diagram of a gas turbine assembly in accordance with an embodiment of the present invention;
- Figure 2 is a more detailed block diagram of a part of the gas turbine of Figure 1;
- Figures 3-5 schematically show burner units of the gas turbine of Figure 1 in different operating conditions;
- Figure 6 is a graph showing first quantities used in the gas turbine of Figure 1;
- Figure 7 is a graph showing second quantities used in the gas turbine of Figure 1;
- Figure 8 is a graph showing third quantities used in the gas turbine of Figure 1; and
- Figure 9 is a block diagram of a gas turbine assembly in accordance with another embodiment of the present invention.

DETAILED DESCRIPTION OF EXEMPLARY EMBODIMENTS

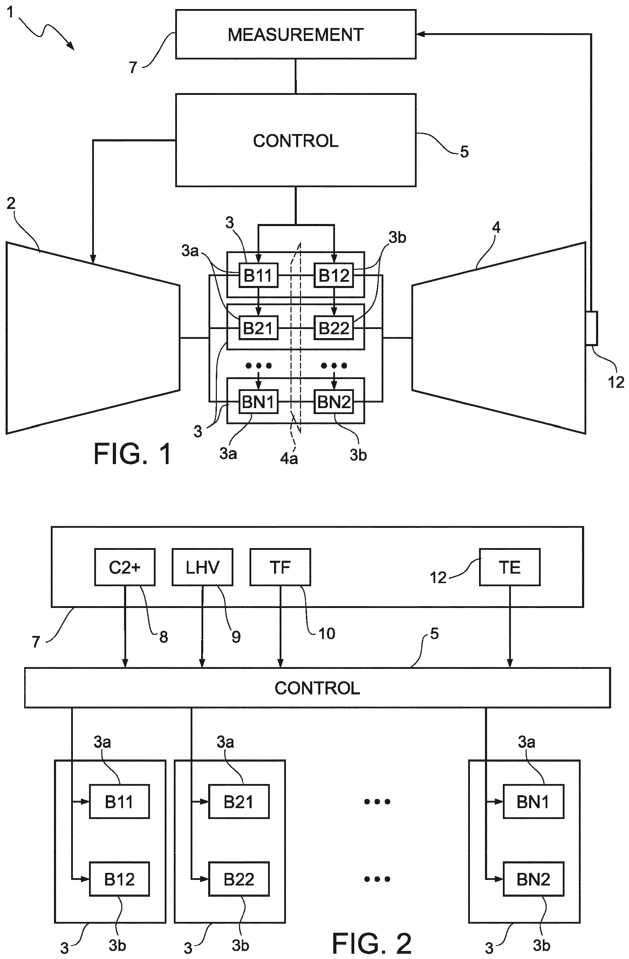

With reference to Figure 1, a gas turbine in accordance with an embodiment of the present invention is designated by numeral 1 and comprises a compressor section 2, a plurality of combustor assemblies 3, a turbine section 4 and a controller 5. The gas turbine 1 is also provided with measurement equipment 7, which may comprise sensors and detector devices (here not shown) and is configured to feed the controller 5 with measurements and/or estimation of operating quantities and parameters of the gas turbine 1.

Each combustor assembly 3 has a respective first stage burner unit 3a and a respective second stage burner unit 3b downstream of the first stage burner unit 3a. Optionally, a high pressure turbine 4a may be provided between the first stage burner units 3a and the second stage burner units 3b. In one embodiment, the combustor assemblies 3 include a set of minimum load combustor assemblies and a set of load-selectable combustor assemblies. The combustor assemblies 3 of the set of minimum load combustor assemblies are always fully active during operation irrespective of current load. In particular, these are the only combustor assemblies 3 active at minimum load operation (e.g. minimum environmental load). In the combustor assemblies 3 of the load-selectable combustor assemblies, the respective second stage burner units 3b are selectively activated at partial load as required by current load. In one embodiment, all combustor assemblies 3 may be load-selectable.

The measurement equipment 7 comprises a reactive species concentration detector 8 (see Figure 2), configured to detect a concentration of reactive species in fuel supplied to the combustor assemblies 3. In one embodiment, in particular, the reactive species include higher hydrocarbons C2+ and the species concentration detector 8 may be an infrared spectrometer. "Higher hydrocarbons" is herein understood as indicating hydrocarbon molecules with at least two atoms of carbon.

In one embodiment, the measurement equipment 7 may furthermore comprise a heating value detector 9 and a fuel temperature detector 10, respectively configured to detect a lower heating value and a fuel temperature of fuel supplied to the combustor assemblies 3. The heating value detector 9 may be, for example, a calorimetric device or a gas composition measurement equipment.

The measurement equipment 7 is also configured to measure or otherwise estimate the exhaust gas temperature downstream of the second stage burners 3b. This could be done, for example, by using thermocouples 12 (Figures 1 and 2) immersed in the exhaust gas flow at the outlet of the turbine section 4 (or the low pressure turbine section, if a high pressure turbine is present).

The controller 5 is configured to control the combustor assemblies 3 based on a load set point which may be generated internally or provided from outside, e.g. by a plant controller, and on measurements of operating quantities of the gas turbine 1 supplied by the measurement equipment 7. Control may be carried out through fuel valves, not shown.

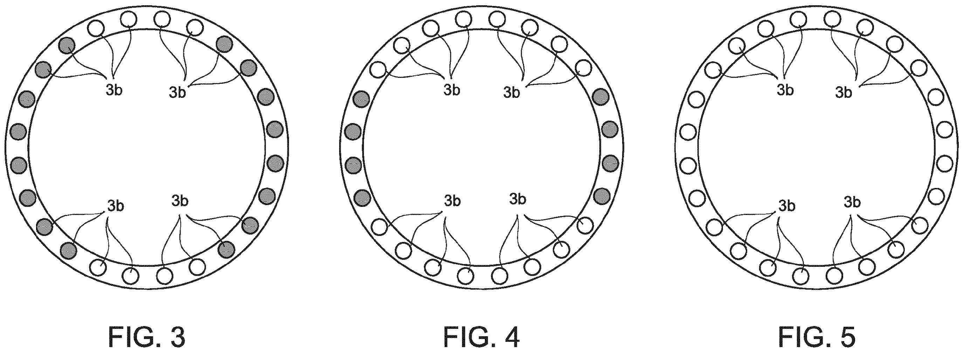

More specifically, the controller 5 is configured to control fuel feed to the first stage burner units 3a of all the combustor assemblies 3 and to selectively activate and deactivate the second stage burner unit 3b of the load-selectable combustor assemblies 3 based on respective switching conditions of individual second stage burner units 3b. The switching conditions reflect the dependency on the actual load of the sequence of activation of the second stage burner units 3b, so that at minimum load operation only second stage burner units 3b of the minimum load combustor assemblies 3 are active and the number of active stage burner units 3b is progressively increased at partial load as load increases until base load condition is reached, when all the second stage burner units 3b activated. This is schematically illustrated in Figures 3-5 where dark and bright circles represent deactivated and activated second stage burner units 3b, respectively, at minimum load (Figure 3), at intermediate partial load (Figure 4) and at base load (Figure 5).

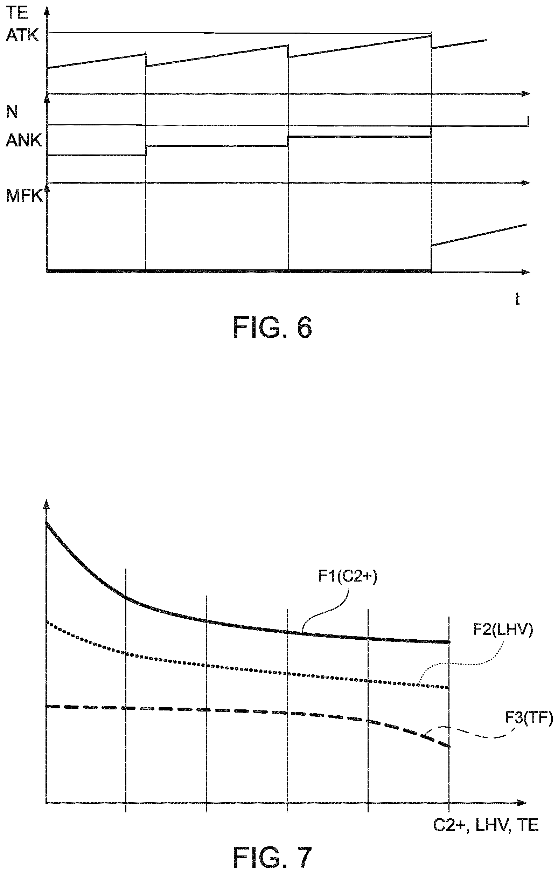

The second stage burner units 3b are activated by the controller 5 as soon as the respective switching conditions are met and deactivated otherwise. In one embodiment, activation control is based on the average exhaust gas temperature as a control quantity and the switching conditions include a relation between respective activation thresholds of the second stage burner units 3b and the exhaust gas temperature and a condition on the number of second stage burner units 3b currently active. With reference to Figure 6, the relation may be defined by a respective activation threshold ATK for the second stage burner unit 3b of each of the load-selectable combustor assemblies 3, i.e. each second stage burner unit 3b is activated when the exhaust gas temperature exceeds the respective activation threshold ATK and a number of currently activated second stage burner units is equal to or greater than a respective activation threshold ANK. When the activation conditions are met, a fuel mass flow MFK is supplied to the second stage burner unit 3b to be activated.

The controller 5 is furthermore configured to adjust the respective activation thresholds ATK of the second stage burner units 3b of the load-selectable combustor assemblies 3 based on the detected concentration of the higher hydrocarbons C2+. Also, in one embodiment the controller 5 may be configured to refine adjustment of the activation thresholds ATK based on fuel lower heating value and/or fuel temperature detected by the heating value detector 9 and a fuel temperature detector 10.

In one embodiment, the respective activation thresholds ATK of the second stage burner units 3b are increased by the controller 5 as the detected concentration of higher hydrocarbon C2+ decreases.

The adjustment may be carried out by determining a respective hydrocarbon correction factor F1(C2+) based on the detected concentration of higher hydrocarbon and by applying the respective hydrocarbon correction factor F1(C2+) to a respective reference activation threshold ATK0. Further correction factors F2(LHV) and F3 (TF), based on detected lower heating value and fuel temperature, may also be determined and applied to the reference activation thresholds ATK0 for refinement.

Hence, the adjusted activation thresholds ATK may be generally determined as follows:

$$ATK = F(C2+, TF, LHV, N, AF)*ATK0$$

where N is the number of active second stage burner units 3b and AF is the current airflow through the combustor assemblies 3.

In one embodiment, the adjusted activation thresholds ATK are specifically determined using correction factors F1(C2+), F2(LHV) and F3 (TF) as follows:

$$ATK = F1(C2+)*F2(LHV)*F3 (TF)*ATK0.$$

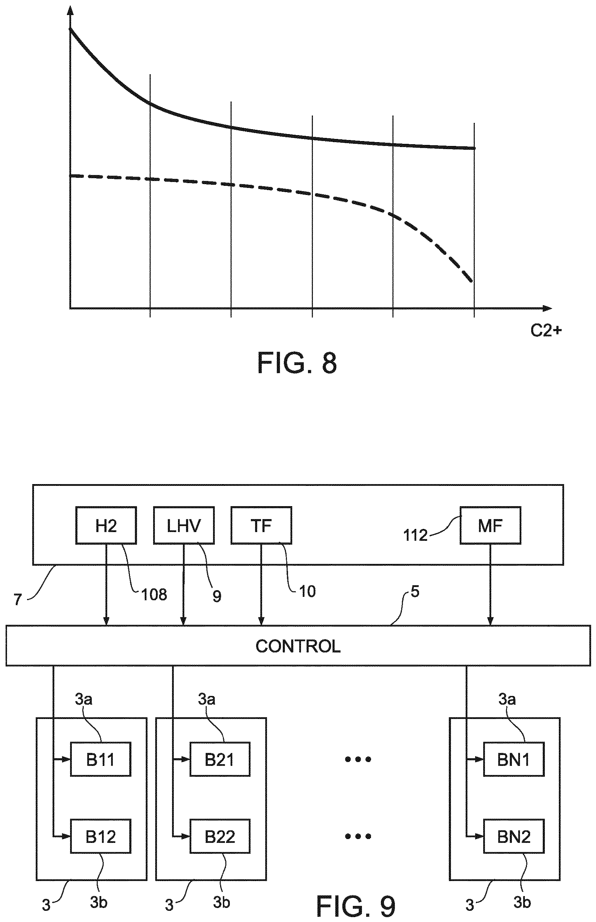

In one embodiment, the hydrocarbon correction factor F(C2+) is a monotonic decreasing function of the detected concentration of higher hydrocarbon decreases less rapidly as the detected concentration of higher hydrocarbons C2+ increases (see Figure 8, solid line).

Exemplary plots of the correction factors F1(C2+), F2(LHV) and F3(TF) is depicted in Figure 7.

The controller 5 is also configured to control the first stage burner units 3a of the combustor assemblies so that a firing temperature TF of the first stage burner units decreases as the detected concentration of higher hydrocarbon C2+ increases. Specifically, the first stage burner units 3a are controlled so that the firing temperature TF of the first stage burner units 3a decreases more rapidly as the detected concentration of higher hydrocarbon C2+ increases, as illustrated in Figure 8 (dashed line).

In another embodiment, illustrated in Figure 9, hydrogen is considered as a reactive species in place of or in addition to higher hydrocarbons C2+ for the purpose of adjusting activation thresholds ATK of the second stage burner units 3b of the load-selectable combustor assemblies 3. Hydrogen concentration may be determined using equipment for stimulated anti-Stokes Raman spectroscopy as a reactive species concentration detector 108. In addition, an overall fuel mass flow MF supplied as a whole to the second stage burner units 3b, which may be detected by a flow meter 112, is used the control quantity. Second stage burner units 3b are activated when the detected fuel mass flow MF exceeds a respective activation threshold and a number of currently activated second stage burner units equal to or greater than a respective activation number.

Finally, it is evident that the described second-stage combustor and method of controlling a sequential combustor may be subject to modifications and variations, without departing from the scope of the present invention, as defined in the appended claims.

In particular, other fuel components could be used as the reactive species to indicate fuel reactivity, in addition to or in combination with higher hydrocarbons and hydrogen. Moreover, reactive species are not bound to a specific control quantity, so different combinations of reactive species and control quantities are available.

**Claims**

1. A gas turbine comprising:

   a plurality of combustor assemblies (3), each having a first stage burner unit (3a) and a second stage burner unit (3b) downstream of the first stage burner unit (3a), the combustor assemblies (3) including at least a set of load-selectable combustor assemblies (3);
   a controller (5), configured to control the combustor assemblies (3) and to selectively activate and deactivate the second stage burner unit (3b) of at least the load-selectable combustor assemblies (3) based on respective switching conditions of individual second stage burner units (3b), the switching conditions including at least a relation between an activation threshold (ATK) and a control quantity (TE; MF); and **characterized by**
   a reactive species concentration detector (8; 108), configured to detect a concentration of reactive species in a fuel supplied to the combustor assemblies (3);
   wherein the controller (5) is configured to adjust the respective activation thresholds (ATK) of at least the second stage burner units (3b) of the load-selectable combustor assemblies (3) based on the detected concentration of the reactive species.

2. The gas turbine according to claim 1, wherein the reactive species include higher hydrocarbons and/or hydrogen.

3. The gas turbine according to any one of the preceding claims, wherein the control quantity is a gas temperature (TE) downstream of the second stage burner units (3b) and the switching conditions of each second stage burner unit (3b) of the load-selectable combustor assemblies (3) include the combination of the gas temperature (TE) greater than the respective activation threshold (ATK) and a number (NA) of currently activated second stage burner units (3b) equal to or greater than a respective activation number.

4. The gas turbine according to any one of claims 1 to 2, wherein the control quantity (TE; MF) is an overall fuel mass flow supplied as a whole to the second stage burner units (3b) and wherein the switching conditions of each second stage burner unit (3b) of the load-selectable combustor assemblies (3) include the combination of the overall fuel mass flow greater than the respective activation threshold (ATK) and a number (N) of currently activated second stage burner units (3b) equal to or greater than a respective activation threshold (ATK).

5. The gas turbine according to any one of the preceding claims, wherein the controller (5) is configured to increase the respective activation thresholds (ATK) of the second stage burner units (3b) of the load-selectable combustor assemblies (3) as the detected concentration of the reactive species decreases.

6. The gas turbine according to any one of the preceding claims, wherein the controller (5) is configured to adjust the respective activation thresholds (ATK) of the load-selectable combustor assemblies (3) by determining a respective correction factor (F(C2+)) based on the detected concentration of the reactive species (C2+; H2) and applying the respective correction factor (F(C2+)) to a respective reference activation threshold (ATK0).

7. The gas turbine according to claim 6, wherein the correction factor (F(C2+)) is a monotonic decreasing function of the detected concentration of the reactive species (C2+; H2).

8. The gas turbine according to claim 7, wherein the correction factor (F(C2+)) decreases less rapidly as the detected concentration of the reactive species (C2+; H2) increases.

9. The gas turbine according to any one of the preceding claims, also comprising a heating value detector (9), configured to detect a lower heating value (LHV) of fuel supplied to the combustor assemblies (3), wherein the controller (5) is configured to adjust the respective activation thresholds (ATK) of at least the second stage burner units (3b) of the load-selectable combustor assemblies (3) also based on the detected lower heating value (LHV).

10. The gas turbine according to any one of the preceding claims, also comprising a fuel temperature detector (10), configured to detect a fuel temperature of fuel supplied to the combustor assemblies (3), wherein the controller (5) is configured to adjust the respective activation thresholds (ATK) of at least the second stage burner units (3b) of the load-selectable combustor assemblies (3) also based on the detected fuel temperature.

11. The gas turbine according to any one of the preceding claims, wherein the controller (5) is configured to control the first stage burner units (3a) of the combustor assemblies (3) so that a firing temperature (TF) of the first stage burner units (3a) decreases as the detected concentration of the reactive species increases.

12. The gas turbine according to claim 11, wherein the controller (5) is configured to control the first stage burner units (3a) so that the firing temperature (TF) of the first stage burner units (3a) decreases more rapidly as the detected concentration of the reactive species (C2+; H2) increases.

13. A method of controlling a gas turbine equipped with a plurality of combustor assemblies (3), each having a first stage burner unit (3a) and a second stage burner unit (3b) downstream of the first stage burner unit (3a), the combustor assemblies (3) including at least a set of load-selectable combustor assemblies (3);
the method comprising:

selectively activating and deactivating the second stage burner units (3b) of at least the load-selectable combustor assemblies (3) based on respective switching conditions of individual second stage burner units (3b), the switching conditions including at least a relation between an activation threshold (ATK) and a control quantity (TE; MF); and **characterized by**
detecting a concentration of reactive species in a fuel supplied to the combustor assemblies (3); and adjusting the respective activation thresholds (ATK) of at least the second stage burner units (3b) of the load-selectable combustor assemblies (3) based on the detected concentration of the reactive species.

14. The method of claim 13, wherein the reactive species include higher hydrocarbons and/or hydrogen.

15. The method of claim 13 or 14, wherein controlling comprises increasing the respective activation thresholds (ATK) of the second stage burner units (3b) of the load-selectable combustor assemblies (3) as the detected concentration of the reactive species decreases.

**Patentansprüche**

1. Gasturbine, umfassend:

   mehrere Brennkammeranordnungen (3), die jeweils eine Erststufen-Brennereinheit (3a) und eine Zweitstufen-Brennereinheit (3b) stromabwärts der Erststufen-Brennereinheit (3a) aufweisen, wobei die Brennkammeranordnungen (3) wenigstens einen Satz an last-selektiven Brennkammeranordnungen (3) enthalten;
   eine Steuervorrichtung (5), die dafür konfiguriert ist, die Brennkammeranordnungen (3) zu steuern und die Zweitstufen-Brennereinheit (3b) wenigstens der last-selektiven Brennkammeranordnungen (3) auf der Grundlage jeweiliger Schaltbedingungen der einzelnen Zweitstufen-Brennereinheiten (3b) selektiv zu aktivieren und zu deaktivieren, wobei die Schaltbedingungen wenigstens eine Relation zwischen einem Aktivierungsschwellenwert (ATK) und einer Steuerungsgröße (TE; MF) enthalten;
   **gekennzeichnet durch**
   einen Detektor für die Konzentration reaktiver Spezies (8; 108L), der dafür konfiguriert ist, eine Konzentration reaktiver Spezies in einem den Brennkammeranordnungen (3) zugeführten Brennstoff zu erfassen;
   wobei die Steuervorrichtung (5) dafür konfiguriert ist, die jeweiligen Aktivierungsschwellenwerte (ATK) von wenigstens den Zweitstufen-Brennereinheiten (3b) der last-selektiven Brennkammeranordnungen (3) auf der Grundlage der erfassten Konzentration der reaktiven Spezies einzustellen.

2. Gasturbine nach Anspruch 1, wobei die reaktiven Spezies höhere Kohlenwasserstoffe und/oder Wasserstoff umfassen.

3. Gasturbine nach einem der vorangehenden Ansprüche, wobei die Steuerungsgröße eine Gastemperatur (TE) stromabwärts der Zweitstufen-Brennereinheiten (3b) ist und wobei die Schaltbedingungen jeder Zweitstufen-Brennereinheit (3b) der last-selektiven Brennkammeranordnungen (3) die Kombination aus der Gastemperatur (TE), die größer ist als der jeweilige Aktivierungsschwellenwert (ATK), und einer Anzahl (NA) von gegenwärtig aktivierten Zweitstufen-Brennereinheiten (3b), die gleich oder größer ist als eine jeweilige Aktivierungsanzahl, enthalten.

4. Gasturbine nach einem der Ansprüche 1 bis 2,
   wobei die Steuerungsgröße (TE; MF) ein den Zweitstufen-Brennereinheiten (3b) insgesamt zugeführter Brennstoff-Gesamtmassenstrom ist und wobei die Schaltbedingungen jeder Zweitstufen-Brennereinheit (3b) der last-selektiven Brennkammeranordnungen (3) die Kombination aus dem Brennstoff-Gesamtmassenstrom, der größer ist als der jeweilige Aktivierungsschwellenwert (ATK), und einer Anzahl (N) von gegenwärtig aktivierten Zweitstufen-Brennereinheiten (3b), die gleich oder größer ist als ein jeweiliger Aktivierungsschwellenwert (ATK), enthalten.

5. Gasturbine nach einem der vorangehenden Ansprüche, wobei die Steuervorrichtung (5) dafür konfiguriert ist, die jeweiligen Aktivierungsschwellenwerte (ATK) der Zweitstufen-Brennereinheit (3b) der last-selektiven Brennkammeranordnungen (3) zu erhöhen, wenn die erfasste Konzentration der reaktiven Spezies abnimmt.

6. Gasturbine nach einem der vorhergehenden Ansprüche, wobei die Steuervorrichtung (5) dafür konfiguriert ist, die jeweiligen Aktivierungsschwellenwerte (ATK) der last-selektiven Brennkammeranordnungen (3) durch Bestimmen eines jeweiligen Korrekturfaktors (F(C2+)) auf der Grundlage der erfassten Konzentration der reaktiven Spezies (C2+; H2) und Anwenden des jeweiligen Korrekturfaktors (F(C2+)) auf einen jeweiligen Referenzaktivierungsschwellenwert (ATK0) einzustellen.

7. Gasturbine nach Anspruch 6, wobei der Korrekturfaktor (F(C2+)) eine monoton fallende Funktion der erfassten Konzentration der reaktiven Spezies (C2+; H2) ist.

8. Gasturbine nach Anspruch 7, wobei der Korrekturfaktor (F(C2+)) mit Zunahme der ermittelten Konzentration der reaktiven Spezies (C2+; H2) weniger schnell abnimmt.

9. Gasturbine nach einem der vorangehenden Ansprüche, ferner einen Heizwertdetektor (9) umfassend, der dafür konfiguriert ist, einen niedrigeren Heizwert (LHV) des den Brennkammeranordnungen (3) zugeführten Brennstoffs zu erfassen, wobei die Steuervorrichtung (5) dafür konfiguriert ist, die jeweiligen Aktivierungsschwellenwerte (ATK) von wenigstens den Zweitstufen-Brennereinheiten (3b) der last-selektiven Brennkammeranordnungen (3) auch auf der Grundlage des erfassten niedrigeren Heizwertes (LHV) einzustellen.

10. Gasturbine nach einem der vorangehenden Ansprüche, ferner einen Brennstofftemperaturdetektor (10) umfassend, der dafür konfiguriert ist, eine Brennstofftemperatur des den Brennkammeranordnungen (3) zugeführten Brennstoffs zu erfassen, wobei die Steuervorrichtung (5) dafür konfiguriert ist, die jeweiligen Aktivierungsschwellenwerte (ATK) von wenigstens den Zweitstufen-Brennereinheiten (3b) der last-selektiven Brennkammeranordnungen (3) auch auf der Grundlage der erfassten Brennstofftemperatur einzustellen.

11. Gasturbine nach einem der vorangehenden Ansprüche, wobei die Steuervorrichtung (5) dafür konfiguriert ist, die Erststufen-Brennereinheiten (3a) der Brennkammeranordnungen (3) so zu steuern, dass eine Feuerungstemperatur (TF) der Erststufen-Brennereinheiten (3a) abnimmt, wenn die erfasste Konzentration der reaktiven Spezies zunimmt.

12. Gasturbine nach Anspruch 11, wobei die Steuervorrichtung (5) dafür konfiguriert ist, die Erststufen-Brennereinheiten (3a) so zu steuern, dass die Feuerungstemperatur (TF) der Erststufen-Brennereinheiten (3a) mit Zunahme der erfassten Konzentration der reaktiven Spezies (C2+; H2) schneller abnimmt.

13. Verfahren zum Steuern einer Gasturbine, die mit mehreren Brennkammeranordnungen (3) ausgestattet ist, die jeweils eine Erststufen-Brennereinheit (3a) und eine Zweitstufen-Brennereinheit (3b) stromabwärts der Erststufen-Brennereinheit (3a) aufweisen, wobei die Brennkammeranordnungen (3) wenigstens einen Satz an last-selektiven Brennkammeranordnungen (3) enthalten;
wobei das Verfahren umfasst:

selektives Aktivieren und Deaktivieren der Zweitstufen-Brennereinheiten (3b) von wenigstens den last-selektiven Brennkammeranordnungen (3) auf der Grundlage der jeweiligen Schaltbedingungen der einzelnen Zweitstufen-Brennereinheiten (3b), wobei die Schaltbedingungen wenigstens eine Relation zwischen einem Aktivierungsschwellenwert (ATK) und einer Steuerungsgröße (TE; MF) enthalten;
**gekennzeichnet durch**
Erfassen einer Konzentration reaktiver Spezies in einem den Brennkammeranordnungen (3) zugeführten Brennstoff; und
Einstellen der jeweiligen Aktivierungsschwellenwerte (ATK) von wenigstens den Zweitstufen-Brennereinheiten (3b) der last-selektiven Brennkammeranordnungen (3) auf der Grundlage der erfassten Konzentration der reaktiven Spezies.

14. Verfahren nach Anspruch 13, wobei die reaktiven Spezies höhere Kohlenwasserstoffe und/oder Wasserstoff umfassen.

15. Verfahren nach Anspruch 13 oder 14, wobei die Steuerung das Erhöhen der jeweiligen Aktivierungsschwellenwerte (ATK) der Zweitstufen-Brennereinheiten (3b) der last-selektiven Brennkammeranordnungen (3) umfasst, wenn die erfasste Konzentration der reaktiven Spezies abnimmt.

**Revendications**

1. Turbine à gaz comprenant :

une pluralité d'ensembles de combustion (3), ayant chacune une unité de brûleur de premier étage (3a) et une unité de brûleur de second étage (3b) en aval de la première unité de brûleur de premier étage (3a), les ensembles de combustion (3) comprenant au moins un groupe d'ensembles de combustion à sélection de charge (3) ;

un contrôleur (5), configuré pour contrôler les ensembles de combustion (3) et pour activer et désactiver sélectivement l'unité de brûleur de second étage (3b) d'au moins les ensembles de combustion à sélection de charge (3) sur la base des conditions de déclenchement respectives des unités de brûleurs de second étage individuelles (3b), les conditions de déclenchement comprenant au moins une relation entre un seuil d'activation (ATK) et une quantité de contrôle (TE ; MF) ; et **caractérisée par**
un détecteur de concentration en espèces réactives (8; 108), configuré pour détecter une concentration en espèces réactives dans un combustible fourni aux ensembles de combustion (3) ;
dans laquelle le contrôleur (5) est configuré pour ajuster les seuils d'activation respectifs (ATK) d'au moins les unités de brûleurs de second étage (3b) des ensembles de combustion à sélection de charge (3) sur la base de la concentration détectée en espèces réactives.

2. Turbine à gaz selon la revendication 1, dans laquelle les espèces réactives comprennent des hydrocarbures supérieurs et/ou de l'hydrogène.

3. Turbine à gaz selon l'une quelconque des revendications précédentes, dans laquelle la quantité de contrôle est une température de gaz (TE) en aval des unités de brûleurs de second étage (3b), et les conditions de déclenchement de chaque unité de brûleur de second étage (3b) des ensembles de combustion à sélection de charge (3) comprennent la combinaison de la température de gaz (TE) supérieure au seuil d'activation respectif (ATK) et d'un nombre (NA) d'unités de brûleurs de second étage actuellement activées (3b) égal ou supérieur à un nombre d'activation respectif.

4. Turbine à gaz selon l'une quelconque des revendications 1 à 2,
dans laquelle la quantité de contrôle (TE ; MF) est un débit massique global de combustible fourni dans son ensemble aux unités de brûleurs de second étage (3b), et dans laquelle les conditions de déclenchement de chaque unité de brûleur de second étage (3b) des ensembles de combustion à sélection de charge (3) comprennent la combinaison du débit massique global de combustible supérieur au seuil d'activation respectif (ATK) et d'un nombre (N) d'unités de brûleurs de second étage actuellement activées (3b) égal ou supérieur à un seuil d'activation respectif (ATK).

5. Turbine à gaz selon l'une quelconque des revendications précédentes, dans laquelle le contrôleur (5) est configuré pour augmenter les seuils d'activation respectifs (ATK) des unités de brûleurs de second étage (3b) des ensembles de combustion à sélection de charge (3) lorsque la concentration détectée en espèces réactives diminue.

6. Turbine à gaz selon l'une quelconque des revendications précédentes, dans laquelle le contrôleur (5) est configuré pour ajuster les seuils d'activation respectifs (ATK) des ensembles de combustion à sélection de charge (3) en déterminant un facteur de correction (F(C2+)) respectif sur la base de la concentration détectée en espèces réactives (C2+ ; H2) et en appliquant le facteur de correction (F(C2+)) respectif à un seuil d'activation de référence (ATK0) respectif.

7. Turbine à gaz selon la revendication 6, dans laquelle le facteur de correction (F(C2+)) est une fonction monotone décroissante de la concentration détectée en espèces réactives (C2+ ; H2).

8. Turbine à gaz selon la revendication 7, dans laquelle le facteur de correction (F(C2+)) diminue moins rapidement lorsque la concentration détectée en espèces réactives (C2+ ; H2) augmente.

9. Turbine à gaz selon l'une quelconque des revendications précédentes, comprenant en outre un détecteur de valeur de chauffage (9), configuré pour détecter un pouvoir calorifique inférieur (LHV) du combustible fourni aux ensembles de combustion (3), dans laquelle le contrôleur (5) est configuré pour ajuster les seuils d'activation respectifs (ATK) d'au moins les unités de brûleurs de second étage (3b) des ensembles de combustion à sélection de charge (3) également sur la base du pouvoir calorifique inférieur (LHV) détecté.

10. Turbine à gaz selon l'une quelconque des revendications précédentes, comprenant en outre un détecteur de température de combustible (10), configuré pour détecter une température de combustible du combustible fourni aux ensembles de combustion (3), dans laquelle le contrôleur (5) est configuré pour ajuster les seuils d'activation respectifs (ATK) d'au moins les unités de brûleurs de second étage (3b) des ensembles de combustion à sélection de charge (3) également sur la base de la température de combustible détectée.

11. Turbine à gaz selon l'une quelconque des revendications précédentes, dans laquelle le contrôleur (5) est configuré pour contrôler les unités de brûleurs de premier étage (3a) des ensembles de combustion (3) de sorte qu'une température d'allumage (TF) des unités de brûleurs de premier étage (3a) diminue lorsque la concentration détectée en espèces réactives augmente.

12. Turbine à gaz selon la revendication 11, dans laquelle le contrôleur (5) est configuré pour contrôler les unités de brûleurs de premier étage (3a) de sorte que la température d'allumage (TF) des unités de brûleurs de premier étage (3a) diminue plus rapidement lorsque la concentration détectée en espèces réactives (C2+ ; H2) augmente.

13. Procédé de contrôle d'une turbine à gaz équipée d'une pluralité d'ensembles de combustion (3), ayant chacune une unité de brûleur de premier étage (3a) et une unité de brûleur de second étage (3b) en aval de l'unité de brûleur de premier étage (3a), les ensembles de combustion (3) comprenant au moins un groupe d'ensembles de combustion à sélection de charge (3) ;
le procédé comprenant :

l'activation et la désactivation sélectives des unités de brûleurs de second étage (3b) d'au moins les ensembles de combustion à sélection de charge (3) sur la base des conditions de déclenchement respectives des unités de brûleurs de second étage respectives (3b), les conditions de déclenchement comprenant au moins une relation entre un seuil d'activation (ATK) et une quantité de contrôle (TE ; MF) ; et **caractérisé par**
la détection d'une concentration en espèces réactives dans un combustible fourni aux ensembles de combustion (3) ; et
l'ajustement des seuils d'activation respectifs (ATK) d'au moins les unités de brûleurs de second étage (3b) des ensembles de combustion à sélection de charge (3) sur la base de la concentration détectée en espèces réactives.

14. Procédé selon la revendication 13, dans lequel les espèces réactives comprennent des hydrocarbures supérieurs et/ou de l'hydrogène.

15. Procédé selon la revendication 13 ou 14, dans lequel le contrôle comprend l'augmentation des seuils d'activation respectifs (ATK) des unités de brûleurs de second étage (3b) des ensembles de combustion à sélection de charge (3) lorsque la concentration détectée en espèces réactives diminue.

1

7

MEASUREMENT

CONTROL

5

2

3

3a

B11

B12

3b

4

B21

B22

• • •

• • •

BN1

BN2

3

3a

4a

3b

12

## FIG. 1

C2+

LHV

TF

12

TE

7

8

9

10

5

CONTROL

3a

B11

3a

B21

3a

BN1

• • •

B12

B22

• • •

BN2

3

3b

3

3b

3

3b

## FIG. 2

FIG. 5

FIG. 4

FIG. 3

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2857658 A1
- EP 2873924 A1
- US 20150152791 A1
- US 20120036863 A1